# EUROPÄISCHE PATENTANMELDUNG

(11) **EP 1 100 045 A1**
(43) Veröffentlichungstag der Anmeldung: **16.05.2001**
(21) Anmeldenummer: 99122486.6
(22) Anmeldetag: 11.11.1999
(51) Int. Cl.: G06K 19/07

(54) **Chipkarte mit einer Kontaktschittstelle und einer kontaktlosen Schnittstelle**

(71) Anmelder: Infineon Technologies AG, 81669 München (DE); SIEMENS AKTIENGESELLSCHAFT, 80333 München (DE)
(72) Erfinder: Hofmann, Harald, 90766 Fürth (DE); Schraud, Gerhard, Dr., 86415 Mering (DE); Woerz, Hans-Walter, 81673 München (DE)
(74) Vertreter: Fischer, Volker, Dipl.-Ing.

(57) **Zusammenfassung**

Bei Chipkarten mit einer Kontaktschnittstelle und einer kontaktlosen Schnittstelle ist ein gleichzeitiger Betrieb beider Schnittstellen nicht möglich; vielmehr kann nur eine der beiden Schnittstellen betrieben werden. Um bei einer Chipkarte mit einer Kontaktschnittstelle (KI) und einer kontaktlosen Schnittstelle (KLI) beide Schnittstellen (KI, KLI) gleichzeitig zur Datenübertragung betreiben zu können, ist die Kontaktschnittstelle (KI) über eine erste Datenleitung (DL1) und die kontaktlose Schnittstelle (KLI) über eine zweite Datenleitung (DL2) mit einer logischen Schaltung (MC) verbunden. In einer oder in beiden Datenleitungen (DL1, DL2) kann je ein steuerbarer Schalter (Sl, S2) vorgesehen sein, der von der logischen Schaltung (MC) angesteuert wird, die vorzugsweise als Microcontroller oder Microprozessor ausgeführt ist. Aus dem von der Kontaktschnittstelle (KI) gelieferten Takt (CL1) und dem von der kontaktlosen Schnittstelle (KLI) gelieferten Takt (CL2) kann beispielsweise durch disjunktive Verknüpfung in einem ODER-Gatter (O) der Takt (CL) für den Mikrocontroller bzw. den Mikroprozessor (MC) erzeugt werden. Die erfindungsgemäße Chipkarte lässt sich in vorteilhafter Weise als elektronische Geldbörse (EG) mit einem Kontostandanzeigegerät (AZ) realisieren.

## Beschreibung

Die Erfindung betrifft eine Chipkarte mit einer Kontaktschnittstelle und einer kontaktlosen Schnittstelle und mit einer logischen Schaltung.

Kreditkarten, Telefonkarten, Versicherungskarten und Ausweiskarten, um nur einige Beispiele einer Vielzahl maschinenles-barer Karten zu nennen, sind als Chipkarten mit einer Kontaktschnittstelle und/oder einer kontaktlosen Schnittstelle sowie einer logischen Schaltung ausgeführt. Auf der Chipkarte ist ein integrierter Schaltkreis angeordnet. Die Spannungsversorgung und die Datenübertragung kann über elektrische Kontakte oder drahtlos mittels einer in der Chipkarte angeordneten Antennenspule erfolgen. Im Schreib-/Lesegerät, in das die Chipkarte gesteckt wird, sind ebenfalls elektrische Kontakte und eine Antennenspule angeordnet, um die Chipkarte sowohl mit einer Spannung versorgen zu können, als auch um die Datenübertragung in beide Richtungen - von der Chipkarte zum Schreib-/Lesegerät und vom Schreib-/Lesegerät zur Chipkarte - zu gewährleisten.

Bei Chipkarten mit einer Kontaktschnittstelle und einer kontaktlosen Schnittstelle ist eine Vorrichtung zur Umschaltung zwischen den beiden Schnittstellen vorgesehen.

Aus DE 39 35 364 C1 ist eine Chipkarte mit einer Kontaktschnittstelle und einer kontaktlosen Schnittstelle bekannt, auf der eine Schaltungsanordnung vorgesehen ist, die detektiert, ob von den Kontakten der Kontaktschnittstelle oder von der Antennenspule der kontaktlosen Schnittstelle eine Versorgungsspannung geliefert wird. Wird von den Kontakten der Kontaktschnittstelle die Versorgungsspannung geliefert, so erzeugt die Schaltungsanordnung ein Steuersignal, welches die Kontaktschnittstelle aktiviert, während im Fall, dass die Antennenspule der kontaktlosen Schnittstelle die Versorgungs-spannung liefert, die kontaktlose Schnittstelle vom Steuersignal dieser Schaltungsanordnung eingeschaltet wird.

In WO 96/38814 ist ebenfalls eine Chipkarte mit einer Kontaktschnittstelle und einer kontaktlosen Schnittstelle beschrieben. Eine in die Chipkarte integrierte Wechselspannungserkennungsschaltung prüft, ob die Antennenspule der kontaktlosen Schnittstelle eine Wechselspannung liefert. Wenn dies der Fall ist, wird die kontaktlose Schnittstelle von der Wechselspannungserkennungsschaltung aktiviert. Wenn dagegen im anderen Fall die Wechselspannungserkennungsschaltung keine Wechselspannung an der Antennenspule der kontaktlosen Schnittstelle detektiert, schaltet sie die Kontaktschnittstelle der Chipkarte ein.

Ein Nachteil dieser bekannten Chipkarten mit einer Kontaktschnittstelle und einer kontaktlosen Schnittstelle liegt darin, dass ein Datenaustausch mit dem Schreib-/Lesegerät entweder nur über die Kontaktschnittstelle oder nur über die kontaktlose Schnittstelle möglich ist.

Es ist daher Aufgabe der Erfindung, eine Chipkarte mit einer Kontaktschnittstelle und einer kontaktlosen Schnittstelle so zu gestalten, dass ein gleichzeitiger Betrieb der Kontaktschnittstelle und der kontaktlosen Schnittstelle und somit ein gleichzeitiger Datenaustausch sowohl über die Kontaktschnittstelle als auch die kontaktlose Schnittstelle ermöglicht wird.

Die Erfindung löst diese Aufgabe mit den im Anspruch 1 angegebenen Merkmalen dadurch, dass die Kontaktschnittstelle über eine erste Datenleitung und die kontaktlose Schnittstelle über eine zweite Datenleitung mit der logischen Schaltung verbunden ist, um eine gleichzeitige Datenübertragung über beide Datenleitungen zu ermöglichen.

Durch die Maßnahme, für jede Schnittstelle eine getrennte Datenleitung vorzusehen, welche die Schnittstelle mit der logischen Schaltung verbindet, ist es möglich, beide Schnittstellen - die Kontaktschnittstelle und die kontaktlose Schnittstelle - gleichzeitig zu betreiben. Es können daher sowohl über die Kontaktschnittstelle als auch über die kontaktlose Schnittstelle Daten von und zum Schreib-/Lesegerät übertragen werden.

Ein erstes Ausführungsbeispiel der erfindungsgemäßen Chipkarte sieht vor, aus dem von der Kontaktschnittstelle empfangenen externen Takt und dem von der kontaktlosen Schnittstelle empfangenen externen Takt einen gemeinsamen Takt für die logische Schaltung zu erzeugen.

Ein zweites Ausführungsbeispiel der Erfindung sieht vor, dass in einer der beiden Datenleitungen ein steuerbarer Schalter liegt, der von der logischen Schaltung angesteuert wird.

Ein drittes Ausführungsbeispiel der erfindungsgemäßen Chipkarte sieht für beide Datenleitungen zwischen den Schnittstellen und der logischen Schaltung je einen steuerbaren Schalter vor, der von der logischen Schaltung angesteuert wird.

Die Erfindung wird nun anhand der in den Figuren abgebildeten Ausführungsbeispiele beschrieben und erläutert. In der Zeichnung zeigen:
- Fig. 1: ein Blockschaltbild einer erfindungsgemäßen Chipkarte,
- Fig. 2: ein erstes Ausführungsbeispiel einer erfindungsge-mäßen Chipkarte,
- Fig. 3: ein zweites Ausführungsbeispiel einer erfindungsge-mäßen Chipkarte,
- Fig. 4.: ein drittes Ausführungsbeispiel einer erfindungsge-mäßen Chipkarte und
- Fig. 5: eine elektronische Geldbörse mit einem Kontostandanzeigegerät.

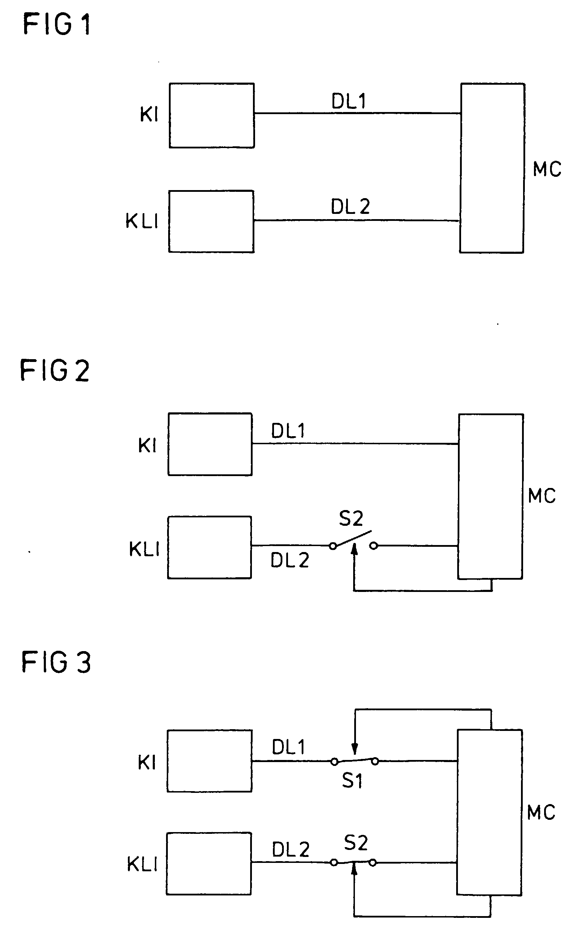

Bei der in der Fig. 1 abgebildeten erfindungsgemäßen Chipkarte ist die Kontaktschnittstelle KI über eine Datenleitung DL1 mit der logischen Schaltung MC verbunden. Ebenso ist die kontaktlose Schnittstelle KLI über eine Datenleitung DL2 mit der logischen Schaltung MC verbunden.

Weil für jede Schnittstelle KI und KLI eine Datenleitung DL1 und DL2 vorgesehen ist, lassen sich die beiden Schnittstellen KI und KLI gleichzeitig betreiben. Die Datenübertragung kann daher simultan sowohl über die Kontakte der Kontaktschnittstelle KI und die Antennenspule AL der kontaktlosen Schnittstelle erfolgen.

In der Fig. 2 ist ein erstes Ausführungsbeispiel der Erfindung gezeigt, das sich von der Chipkarte aus der Fig. 1 dadurch unterscheidet, dass in einer Datenleitung, zum Beispiel der Datenleitung DL2, ein steuerbarer Schalter S2 liegt, der von der logischen Schaltung MC angesteuert wird. Dadurch kann die kontaktlose Schnittstelle KL jederzeit von der logischen Schaltung MC getrennt oder an sie angeschlossen werden. Selbstverständlich kann der steuerbare Schalter auch in der anderen Datenleitung DL1 liegen, um die Kontaktschnittstelle KI an die logische Schaltung MC anzuschließen oder von ihr zu trennen.

In der Fig. 3 ist ein zweites Ausführungsbeispiel der Erfindung gezeigt, bei dem in der Datenleitung DL1, welche von der Kontaktschnittstelle KI zur logischen Schaltung MC führt, ein steuerbarer Schalter S1 liegt und bei der auch in der anderen Datenleitung DL2, welche von der kontaktlosen Schnittstelle KLI zur logischen Schaltung MC führt, ebenfalls ein steuerbarer Schalter S2 liegt. Die beiden steuerbaren Schalter S1 und S2 werden von der logischen Schaltung MC angesteuert.

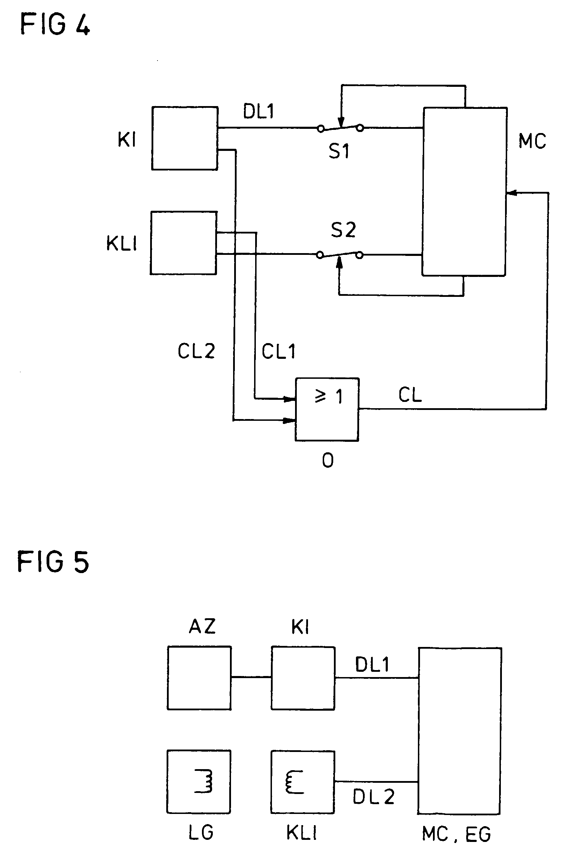

Bei dem in der Fig. 4 dargestellten dritten Ausführungsbeispiel der Erfindung wird aus dem von der Kontaktschnittstelle KI empfangenen externen Takt CL1 und dem von der kontaktlosen Schnittstelle KLI empfangenen externen Takt CL2 der Takt CL für die logische Schaltung MC erzeugt. Beispielsweise werden die beiden von den Schnittstellen KI und KLI gelieferten Takte CL1 und CL2 disjunktiv in einem ODER-Gatter O verknüpft, dessen Ausgang mit dem Takteingang der logischen Schaltung MC verbunden ist.

Für die logische Schaltung MC ist ein Microcontroller oder ein Microprozessor besonders gut geeignet.

Die erfindungsgemäße Chipkarte bietet folgende drei Betriebsarten: In der erfindungsgemäßen Chipkarte kann entweder nur die Kontaktschnittstelle oder die kontaktlose Schnittstelle oder aber es können beide Schnittstellen in Betrieb sein. Bei gleichzeitigem Betrieb beider Schnittstellen wird die Datenrate in vorteilhafter Weise beträchtlich erhöht. Es können bei Datenübertragung über beide Schnittstellen zum Beispiel sicherheitsrelevante Daten, wie zum Beispiel Schlüssel, über die Kontaktschnittstelle übertragen werden, während eher unkritische Daten, beispielsweise verschlüsselte Daten, über die Kontaktschnittstelle übertragen werden.

Die erfindungsgemäße Chipkarte lässt sich beispielsweise bei einer kontaktlosen elektronischen Geldbörse vorteilhaft einsetzen, die in Fig. 5 gezeigt ist.

Die elektronische Geldbörse EG ist als Software in der logischen Schaltung MC realisiert und kommuniziert über die Datenleitung DL2 und die kontaktlose Schnittstelle KLI mit einem Lesegerät LE. Ein Kontostandsanzeigegerät AZ, das den aktuellen Kontostand anzeigt, ist an die Kontaktschnittstelle KI angeschlossen.

## Patentansprüche

1. Chipkarte mit einer Kontaktschnittstelle (KI), mit einer kontaktlosen Schnittstelle (KLI) und mit einer logischen Schaltung (MC),
**dadurch gekennzeichnet**,dass die Kontaktschnittstelle (KI) über eine erste Datenleitung (DL1) mit der logischen Schaltung (MC) und die kontaktlose Schnittstelle (KLI) über eine zweite Datenleitung (DL2) mit der logischen Schaltung (MC) verbunden ist, um eine gleichzeitige Datenübertragung über beide Datenleitungen zu ermöglichen.

2. Chipkarte nach Anspruch 1,
**dadurch gekennzeichnet**,dass in mindestens einer der beiden Datenleitungen (DL1, DL2) ein von der logischen Schaltung (MC) steuerbarer Schalter (S1, S2) liegt.

3. Chipkarte nach Anspruch 1 oder 2,
**dadurch gekennzeichnet**,dass der von der Kontaktschnittstelle (KI) gelieferte Takt (CL1) und der von der kontaktlosen Schnittstelle (KLI) gelieferte Takt (CL2) an den Eingängen einer logischen Verknüpfungsschaltung (O) liegen, deren Ausgang mit dem Takteingang der logischen Schaltung (MC) verbunden ist.

4. Chipkarte nach Anspruch 3,
**dadurch gekennzeichnet**,dass für die logische Verknüpfungsschaltung ein ODER-Gatter (O) vorgesehen ist.

5. Chipkarte nach Anspruch 1, 2, 3 oder 4,
**dadurch gekennzeichnet**,dass für die logische Schaltung (MC) ein Microcontroller oder ein Microprozessor vorgesehen ist.

6. Chipkarte nach einem der vorangehenden Ansprüche, **dadurch gekennzeichnet**,dass die Chipkarte als elektronische Geldbörse (EG) ausgeführt ist, dass die elektronische Geldbörse (EG) über die zweite Datenleitung (DL2) mit der kontaktlosen Schnittstelle (KLI) verbunden ist, und dass ein Kontostandanzeigegerät (AZ) an die Kontaktschnittstelle (KI) anschließbar ist.
